(19) Europäisches Patentamt
European Patent Office
Office européen des brevets

(11) **EP 3 266 890 B1**

(12) **EUROPÄISCHE PATENTSCHRIFT**

(45) Veröffentlichungstag und Bekanntmachung des Hinweises auf die Patenterteilung:
**25.08.2021   Patentblatt 2021/34**

(21) Anmeldenummer: **16178458.2**

(22) Anmeldetag: **07.07.2016**

(51) Int Cl.:
*C22C 21/00* *(2006.01)*         *B23K 35/28* *(2006.01)*
*B23K 35/02* *(2006.01)*         *B32B 15/01* *(2006.01)*
*C22C 21/02* *(2006.01)*         *F28F 13/18* *(2006.01)*

(54) **VERWENDUNG EINES BANDS MIT RICHTUNGSUNABHÄNGIGER OBERFLÄCHENTOPOGRAPHIE ZUR HERSTELLUNG EINES WÄRMETAUSCHERBAUTEILS**

USE OF A TAPE HAVING OMNIDIRECTIONAL SURFACE TOPOGRAPHY FOR PRODUCING A HEAT EXCHANGER COMPONENT

UTILISATION D'UNE BANDE A L'AIDE DE LA TOPOGRAPHIE DE SURFACE INDEPENDAMMENT DE LA DIRECTION POUR FABRIQUER UN COMPOSANT D'ECHANGEUR THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.01.2018   Patentblatt 2018/02**

(73) Patentinhaber: **Speira GmbH**
**41515 Grevenbroich (DE)**

(72) Erfinder:
• **Janssen, Hartmut, Dr.**
  **40724 Hilden (DE)**
• **Nitzsche, Gernot**
  **53340 Meckenheim (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A2- 1 202 018         DE-A1-102011 120 255**
**US-A- 3 906 605          US-A1- 2010 124 668**
**US-A1- 2013 273 394**

• **None**

EP 3 266 890 B1

**Beschreibung**

Die Erfindung betrifft eine Verwendung eines Bands aus einer Aluminiumlegierung zur Herstellung eines Wärmetauscherbauteils. Weiter betrifft die Erfindung ein Aluminiumlegierungsband zur Herstellung eines Wärmetauscherbauteils über eine Umformung, insbesondere für eine erfindungsgemäße Verwendung.

Wärmetauscher, wie diese beispielsweise in Kraftfahrzeugen eingesetzt werden, verfügen über ein Rohrleitungssystem für ein Kühlmedium. Üblicherweise sind mehrere parallel verlaufende Rohre vorgesehen, wobei zwischen den Rohren mäanderförmig gebogene Lamellen angeordnet sind. Die Rohre sind mit mindestens einem Rohrboden verbunden. Die technischen Entwicklungen im Kraftfahrzeugbau der letzten Jahre umfassen das Bestreben einer möglichst weitgehenden Gewichtseinsparung bei gleichzeitiger Steigerung der Effizienz für eine bessere Wirtschaftlichkeit. Wärmetauscher werden daher üblicherweise aus leichtgewichtigen Bauteilen umfassend Aluminiumlegierungen hergestellt, wobei die Bauteile über ein thermisches Fügen, beispielsweise einem CAB-Lötverfahren, miteinander verbunden werden.

Problematisch für eine produktionssichere Bereitstellung langlebiger Wärmetauscher ist jedoch, dass die jüngsten technischen Entwicklungen eine deutliche Verringerung der Materialstärken anstreben, wobei in einigen Anwendungen auch gleichzeitig ein höherer Betriebsdruck für das Kühlmedium verwendet werden soll. Bei sonst gleichem Design kann dies dazu führen, dass die zur Verfügung stehende Lotmenge geringer ausfällt. Selbst bei entsprechend modifizierten Designs kann die angebotene Lotmenge kritisch sein. Im Zusammenhang mit geringen Materialstärken ist beim thermischen Fügen weiter problematisch, dass die Fügestellen leichter durchbrennen und auch Diffusionseffekte eine erhebliche Schwächung des Materials im Bereich der Fügestelle verursachen können.

Daher gibt es Bestrebungen, die Lötfähigkeit der Wärmetauscherbauteile trotz den geringer werdenden Materialstärken weiter zu verbessern. Dies ist besonders bei Fügestellen wichtig, welche nur kleine Anlageflächen zwischen den zu verbindenden Bauteilen aufweisen. Die Fügestellen zwischen den Lamellen und den Rohren sind in dieser Hinsicht bereits problematisch.

Eine besondere Herausforderung besteht jedoch bei den Rohrböden oder Sammlern des Wärmetauschers, welche stirnseitig an die Enden der Rohre gefügt werden. Ein Rohrboden wird aus einem Blech oder einem Band hergestellt. Öffnungen werden in den Rohrboden eingebracht, in welche die Rohre gesteckt und anschließend verlötet werden. Aufgrund der Geometrie mit im Wesentlichen senkrecht aufeinander stehenden Flächen der Rohre und des Rohrbodens wird den Fügestellen nur wenig Anlagefläche geboten, so dass die Gefahr von fehlerhaften Fügestellen oder einer Schwächung des Materials beim thermischen Fügen hier besonders groß ist. Durch die geringen Materialstärken ergibt sich auch mit den beim Betrieb anfallenden Druckschwankungen eine kontinuierliche wechselseitige elastische Verformung der Rohre und des Rohrbodens, was die Fügestellen der Bauteile weiter belastet.

Die US 2010/0124668 A1 beschreibt ein Trittblech mit einer regelmäßigen erhabenen Struktur.

Die EP 1 202 018 A2 betrifft ein Aluminiumblech mit erhöhter Oberfläche, um bei einem Wärmetauscher einen verbesserten Wärmetransport zu ermöglichen.

Daher liegt der vorliegenden Erfindung die Aufgabe zugrunde, eine Verwendung eines Bands aus einer Aluminiumlegierung anzugeben, welche die Herstellung von Wärmetauschern weiter verbessert. Zudem soll ein Aluminiumlegierungsband zur Herstellung eines Wärmetauscherbauteils über eine Umformung angegeben werden. Gemäß einer ersten Lehre wird die oben genannte Aufgabe betreffend eine Verwendung dadurch gelöst, dass ein walzgeprägtes Band verwendet wird, welches mindestens einen Bereich mit einer im Wesentlichen richtungsunabhängigen Oberflächentopographie aufweist und das Band bei der Herstellung des Wärmetauscherbauteils einer Umformung unterworfen wird, wobei zumindest der Bereich mit der im Wesentlichen richtungsunabhängigen Oberflächentopographie umgeformt wird und der Mittelwert für das geschlossene Leervolumen Vvcl der Oberflächentopographie des Bands mindestens 130 mm3 / m2 beträgt.

Es wurde erkannt, dass mit einer entsprechenden Umformung des Bands, im Zusammenhang einer walzgeprägten Oberfläche mit einer im Wesentlichen richtungsunabhängigen Oberflächentopografie besonders große Anlageflächen für das Fügen mit weiteren Wärmetauscherbauteilen bereitgestellt werden können. "Im Wesentlichen richtungsunabhängig" bedeutet in diesem Zusammenhang, dass die Oberfläche der verwendeten Prägewalzen eine richtungsunabhängige Oberflächentopografie aufweist, welche zumindest teilweise auf das Band übertragen wurde. Auf das Band wird somit vorrangig mit dem Prägewalzen eine richtungsunabhängige Oberflächentopografie eingebracht, wobei jedoch durch den Walzvorgang eine geringe Streckung der walzgeprägten Oberflächentopographie in Walzrichtung und damit eine unvermeidbare, geringfügige Richtungsabhängigkeit der Oberflächentopografie entstehen kann. Eine solche mit einer unvermeidbaren geringfügigen Richtungsabhängigkeit versehene walzgeprägte Oberfläche wird im Weiteren auch als richtungsunabhängige Oberflächentopografie des Blechs bezeichnet.

Dabei können für eine Verbindung mit beispielsweise Rohren an den in das Band einzubringenden Öffnungen durch eine Umformung sehr große Tiefungen eingebracht werden, welche eine entsprechende Anlagefläche bzw. Fügefläche mit den Rohren bieten. Hierbei ist weiter vorteilhaft, dass über entsprechende Anlageflächen auch das Material der Rohre über die Länge der Tiefung gestützt ist, womit elastische Verformungen der Rohre und damit eine mögliche Ermüdung der Fügestelle gemindert werden.

Die Umformung wird dabei entscheidend durch die walzgeprägte Oberflächentopographie begünstigt. Die im Stand der Technik für Wärmetauscher verwendeten Bänder weisen üblicherweise eine gewalzte Oberfläche auf, wobei die Oberflächentopographie mit der Walzrichtung eine Vorzugsrichtung aufweist, insbesondere eine sogenannte Mill-Finish-Oberfläche, welche Längsriefen und -stege zeigt. Im Gegensatz hierzu weist das Band in der hier beschriebenen Verwendung eine richtungsunabhängige Oberflächentopographie auf. Durch die richtungsunabhängige Oberflächentopographie wird die Umformung begünstigt, da insbesondere Schmierstofftaschen für die Umformung mit einem Schmierstoff bereitgestellt werden. Somit werden über diese Oberflächentopographie Tiefungen möglich, welche sich mit den herkömmlich für Wärmetauscherbauteile verwendeten Bändern nicht erreichen lassen.

Vorzugsweise weist das Band einseitig oder beidseitig eine prägegewalzte Oberfläche und damit einseitig oder beidseitig eine im Wesentlichen richtungsunabhängige Oberflächentopographie auf. Insbesondere ist das Band einseitig oder beidseitig über die gesamte Fläche über ein Prägewalzen mit einer richtungsunabhängigen Oberflächentopographie versehen. Damit kann die Umformung des Bands flexibler gestaltet werden.

Insbesondere wird mit der Umformung mindestens ein Durchzug in das Wärmetauscherbauteil eingebracht, womit im Bereich einer Öffnung im Wärmetauscherbauteil sehr große Tiefungen entstehen, welche zum Fügen an weitere Wärmetauscherbauteile, insbesondere Rohre, verwendet werden können.

Die Verwendung kann ein Abteilen des Bands in Bleche umfassen. Eine solche Abteilung kann vor oder nach einem Umformen vorgenommen werden.

Gemäß einer weiteren Ausgestaltung der Verwendung umfasst die Umformung einen Ziehvorgang. Mit einem Ziehvorgang kann die prägegewalzte Oberflächentopographie besonders vorteilhaft genutzt werden, da insbesondere eine Reibungsminimierung zwischen Werkzeug und Band das Ziehergebnis beeinflusst. Die Spannungsverhältnisse im Material werden durch die Bereitstellung von Schmierstofftaschen verbessert, so dass größere Tiefungen erreicht werden.

Größere Tiefungen für Wärmetauscherbauteile können insbesondere durch ein Gleitziehen erreicht werden. Gleitziehen ist ein Durchziehen des Werkstücks durch ein feststehendes Ziehwerkzeug. Besonders beim Gleitziehen werden an die Schmierung des Werkstücks und des Werkzeugs hohe Anforderungen gestellt.

In einer weiteren Ausgestaltung der Verwendung umfasst die Umformung ein Abstreckgleitziehen. Hierbei wird das Band zumindest abschnittsweise als Hohlkörper ausgeformt, wobei der Hohlkörper mit einem Stempel durch eine Matrize gezogen wird. Dabei werden vergleichsweise geringe Umformungskräfte eingesetzt, um eine möglichst große Tiefung zu erreichen. Ein weiterer Vorteil des Abstreckgleitziehens besteht darin, dass die Wandstärke der umgeformten Bereiche im Wesentlichen homogen gehalten werden kann. Bei einem Abstreckgleitziehen kann die Oberflächentopographie weiter vorteilhaft genutzt werden, da die Bildung von Schmierstofftaschen das Gleiten des Materials des Bands über das Werkzeug besonders begünstigt. Mit einem Abstreckgleitziehen lassen sich somit prozesssicher sehr große Tiefungen bereitstellen. Das Abstreckgleitziehen kann effektiv für das Einbringen von Durchzügen in das Band genutzt werden.

Gemäß einer weiteren Ausgestaltung der Verwendung wird das Band vor der Umformung einer Schlitzung unterworfen. Mit einer Schlitzung vor dem Umformen kann eine vordefinierte Öffnung für einen Durchzug prozesssicher bereitgestellt werden. Dies ist insbesondere vorteilhaft bei der Verbindung des Wärmetauscherbauteils mit Rohren. Die Oberflächentopographie ist auch vorteilhaft für eine optionale Vorprägung, welche der eigentlichen Umformung oder auch einer Schlitzung vorausgehen kann.

Gemäß einer weiteren Ausgestaltung der Verwendung weist das Band eine Aluminiumlegierung des Typs AA3xxx auf. Insbesondere besteht das Band aus einer Aluminiumlegierung des Typs AA3xxx. Bevorzugte Varianten der AA3xxx-Legierung sind die Typen AA3005, AA3003 oder AA3017.

Weiter kann das Band eine Aluminiumlegierung mit einer der folgenden Zusammensetzungen aufweisen oder daraus bestehen:

| | | | | |
|---|---|---|---|---|
| 0,25 % | ≤ | Cu | ≤ | 0,60 %, |
| 0,25 % | ≤ | Fe | ≤ | 0,4 %, |
| | | Mg | ≤ | 0,10 %, |
| 0,9 % | ≤ | Mn | ≤ | 1,5 %, |
| | | Si | ≤ | 0,25 %, |
| | | Ti | ≤ | 0,25 %, |
| | | Zn | ≤ | 0,10 %, |
| | | Cr | ≤ | 0,15 %, |

Rest Al und Verunreinigungen einzeln ≤ 0.05 %, in Summe ≤ 0.15 %,

oder

| | | | | |
|---|---|---|---|---|
| 0,1 % | ≤ | Cu | ≤ | 0,6 %, |
| | | Fe | ≤ | 0,7 %, |
| 0,2 % | ≤ | Mg | ≤ | 0,60%, |
| 1,0 % | ≤ | Mn | ≤ | 1,6 %, |
| | | Si | ≤ | 0.7 %, |
| | | Ti | ≤ | 0,10 %, |
| | | Zn | ≤ | 0,25 %, |
| | | Cr | ≤ | 0,1 %, |

Rest Al und Verunreinigungen einzeln ≤ 0,05 %, in Summe ≤ 0,15 %,
oder

| | | | | |
|---|---|---|---|---|
| 0,2 % | ≤ | Cu | ≤ | 0,8 %, |
| | | Fe | ≤ | 0,7 %, |
| | | Mg | ≤ | 0,30 %, |
| 1,0 % | ≤ | Mn | ≤ | 1,5 %, |
| | | Si | ≤ | 0,6 %, |
| | | Zn | ≤ | 0,10 %, |

Rest Al und Verunreinigungen einzeln ≤ 0.05 %, in Summe ≤ 0.15 %.

Die genannten Aluminiumlegierungen weisen aufgrund erhöhter Cu-Gehalte verbesserte Festigkeiten bei verbesserter Korrosionsbeständigkeit aufgrund eines erhöhten elektrochemischen Potentials auf.

Gemäß einer weiteren Ausgestaltung weist das Band eine Kernschicht und mindestens eine Außenschicht auf. Mit der mindestens einen Außenschicht kann insbesondere eine Lotschicht bereitgestellt werden. Auch kann eine Außenschicht in Form einer Korrosionsschutzschicht alternativ oder zusätzlich auf der Kernschicht vorgesehen sein. Ebenso können weitere Schichten vorgesehen sein, beispielsweise eine Konversionsschicht. Mit einer solchen Ausgestaltung des Bands als Verbundmaterial können die Vorteile mehrerer verschiedener Materialien kombiniert werden.

In einer Ausführungsform wird das Band durch Walzplattieren oder simultanes Gießen hergestellt. Dadurch wird ein in wirtschaftlich großem Maßstab herstellbarer Verbundwerkstoff bereitgestellt, insbesondere durch eine Herstellung des Verbundwerkstoffs durch simultanes Gießen oder Walzplattieren. Alternativ zum Simultangießen oder Walzplattieren besteht auch die Möglichkeit, die Außenschicht durch thermisches Spritzen aufzubringen. Die erstgenannten Varianten sind allerdings die derzeit in großem industriellem Umfang genutzten Verfahren zur Herstellung eines Aluminiumverbundwerkstoffs, wobei sich der gegossene Werkstoff durch seine deutlichen Konzentrationsgradienten zwischen den verschiedenen Aluminiumlegierungsschichten von den diskreten Schichtzusammensetzungen des walzplattierten Werkstoffs unterscheidet. Beim Walzplattieren finden nur geringe Diffusionsprozesse zwischen den Schichten statt.

Das Band kann weichgeglüht, rückgeglüht oder lösungsgeglüht vorliegen. Durch Weichglühen, Rückglühen oder Lösungsglühen können die mechanischen Eigenschaften des Bands und insbesondere eines Verbundwerkstoffs, insbesondere der Kernschicht entsprechend den vorgesehenen Eigenschaften des Wärmetauscherbauteils eingestellt werden.

Gemäß einer Ausgestaltung der Verwendung weist die Außenschicht eine Aluminiumlegierung des Typs AAlxxx, AA4xxx oder AA7xxx auf. Die Außenschicht kann auch aus den entsprechenden Legierungen bestehen.

Eine Außenschicht mit Legierungen des Typs AA lxxx kann insbesondere die Umformung weiter optimieren und zu weiter gesteigerten Tiefungen führen. Ein bevorzugter Legierungstyp ist hierbei AA1050.

Eine Außenschicht mit einer Legierung des Typs AA4xxx kann aufgrund des üblicherweise verringerten Schmelzpunkts dieser Legierungen als Lotschicht dienen. Hierbei ergibt sich besonders mit den Legierungstypen AA4004, AA4045 und AA4343 auch bei geringen Materialstärken bzw. Lotmengen ein gutes Lötergebnis.

Eine Außenschicht mit Legierungen des Typs AA7xxx kann insbesondere als Korrosionsschutzschicht eingesetzt werden.

Die genannten Aluminiumlegierungen der Typen AA1xxx, AA4xxx oder AA7xxx können insbesondere in Kombination mit einer Kernschicht aufweisend eine Aluminiumlegierung des Typs AA3xxx verwendet werden, um eine optimale Kombination der Eigenschaften der Legierungen in einem Verbundwerkstoff zu bieten. Insbesondere die oben genannten Varianten und Modifikationen der AA3xxx-Legierungen können für die Kernschicht eingesetzt werden.

Die über ein Prägewalzen eingebrachte Oberflächentopographie kann durch verschiedene Strukturierungen der Prägewalze beeinflusst werden. Insbesondere kann eine Prägewalze über eines oder mehrere der folgenden Verfahren strukturiert werden:

Electrical Discharge Texturing (EDT),
- Electron Beam Texturing (EBT),
- Laser Texturing (LT) bzw. "Digital Texturing" (DT),
- Reactor Coating (beispielsweise "Topocrom") und
- Shot Blast Texturing (SBT).

Jedes der Verfahren bewirkt eine spezifische Oberflächentopographie auf der Prägewalze, welche über den Walzvorgang auf das Band übertragen wird. Entsprechend ist auch die Oberflächentopographie des verwendeten Bands direkt abhängig von dem Strukturierungsverfahren der Prägewalze. Eine über "Electrical Discharge Texturing" (EDT) hergestellte Oberflächenstruktur erlaubt eine hohe Anzahl von Spitzen im Oberflächenprofil. Mit "Electron Beam Texturing" (EBT) können kontrolliert verteilte Vertiefungen in der Oberfläche bereitgestellt werden. Durch beide Verfahren hergestellte Oberflächenstrukturen in den Arbeitswalzen sind gut zum Prägewalzen geeignet. Darüber hinaus ist es auch möglich, "Shot Blasting Texturing" (SBT) zur Oberflächenstrukturierung zu verwenden. Auch denkbar ist eine mit "Reactor Coating" behandelte Oberfläche, beispielsweise eine strukturierte Chromschicht oder eine mittels Laser texturierte Oberfläche. Mit einer Auswahl von einem dieser Verfahren oder einer Kombination mehrerer Verfahren können Oberflächentopographien mit gezielten Eigenschaften des Bands bereitgestellt werden.

Die Rauheitswerte der Oberflächen der Prägewalzen sind üblicherweise aufgrund des Abprägeverhaltens höher als die angestrebten Rauheitswerte der walzgeprägten Oberfläche des Bands. Bevorzugte Bereiche für den Mittenrauwert $R_a$ der Walzoberfläche der Prägewalzen liegen beispielsweise bei 1,3 $\mu$m bis 3,0 $\mu$m, insbesondere von 1,8 $\mu$m und 2,5 $\mu$m. Die Spitzenzahl $R_{pc}$ der Walzoberfläche kann 80 cm$^{-1}$ bis 120 cm$^{-1}$, bevorzugt 90 cm$^{-1}$ bis 110 cm$^{-1}$ betragen.

Zur Beschreibung der spezifisch ausgebildeten Oberflächentopographie stehen gemäß DIN EN ISO 25178 zur flächenhaften Rauheitsmessung die reduzierte Spitzenhöhe $S_{pk}$, die Kernrautiefe $S_k$ und die reduzierte Muldentiefe (auch reduzierte Riefentiefe genannt) $S_{vk}$ zur Verfügung.

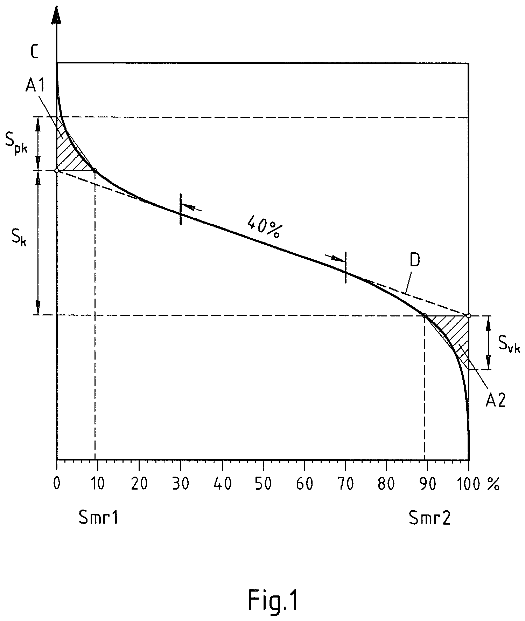

Alle drei genannten Parameter können gemäß DIN EN ISO 25178 aus einer sogenannten Abbott-Kurve abgelesen werden. Um die Abbott-Kurve zu erhalten, wird eine Oberfläche üblicherweise optisch dreidimensional vermessen. In das gemessene dreidimensionale Höhenprofil der Oberfläche werden ebene Flächen, die sich parallel zur gemessenen Oberfläche erstrecken, in einer Höhe c eingebracht, wobei c vorzugsweise als Distanz zur Nulllage der vermessenen Oberfläche bestimmt wird. Der Flächeninhalt der Schnittfläche der eingebrachten ebenen Flächen mit der gemessenen Oberfläche in der Höhe c wird ermittelt und mit der gesamten Messfläche dividiert, um den Flächenanteil der Schnittfläche an der Gesamtmessfläche zu erhalten. Dieser Flächenanteil wird für verschiedene Höhen c bestimmt. Die Schnittflächenhöhe wird dann als Funktion des Flächenanteils dargestellt, woraus sich die Abbott-Kurve ergibt, Fig. 1.

Mit Hilfe der Abbott-Kurve können die reduzierte Spitzenhöhe ($S_{pk}$), Kernrautiefe ($S_k$) und die reduzierte Muldentiefe ($S_{vk}$) ermittelt werden. Alle drei Parameter verweisen auf unterschiedliche Oberflächeneigenschaften. Es wurde ermittelt, dass insbesondere die reduzierte Muldentiefe ($S_{vk}$) mit einem verbesserten Umformverhalten korreliert.

Die Abbott-Kurve weist üblicherweise für gewalzte Oberflächen einen S-förmigen Verlauf auf. In diesen S-förmigen Verlauf der Abbott-Kurve wird eine Sekante mit einer Länge von 40 % des Materialanteils, in der Abbott-Kurve so weit verschoben, bis diese einen minimalen Steigungsbetrag aufweist. Dies ist üblicherweise im Wendepunkt der Abbott-Kurve der Fall. Die Verlängerung dieser Gerade bis zu 0 % Material bzw. 100 % Materialanteil ergibt wiederum zwei Werte für die Höhe c bei 0 % bzw. 100 % Materialanteil. Der vertikale Abstand der beiden Punkte ergibt die Kernrautiefe $S_k$ des Profils. Die reduzierte Muldentiefe $S_{vk}$ ergibt sich aus einem mit den Talflächen der Abbott-Kurve flächengleichen Dreieck $A_2$ mit einer Basislänge von 100 % - Smr2, wobei sich Smr2 aus dem Schnittpunkt der Abbott-Kurve mit einer Parallelen zur X-Achse, welche durch den Schnittpunkt der Verlängerung der Sekante mit der 100%-Abszisse verläuft, ergibt. Die Höhe dieses flächengleichen Dreiecks entspricht bei einer Flächenmessung der reduzierten Muldentiefe $S_{vk}$, Fig. 1.

Die reduzierte Spitzenhöhe $S_{pk}$ ist die Höhe des mit den Kuppenflächen der Abbott-Kurve flächengleichen Dreiecks mit der Basislänge Smr1. Smr1 ergibt sich aus dem Schnittpunkt der Abbott-Kurve mit einer Parallelen zur X-Achse, welche durch den Schnittpunkt der Verlängerung der oben genannten Sekante mit der 0%-Achse verläuft.

Die Parameter $S_k$, $S_{pk}$ und $S_{vk}$ bei einer Flächenmessung ermöglichen eine getrennte Betrachtung des Profils in Bezug auf den Kernbereich, Spitzenbereich und Riefenbereich bzw. Muldenbereich.

Als weiterer Parameter der Oberfläche kann auch die Muldendichte der Textur $n_{clm}$ verwendet werden. Die Muldendichte gibt die maximale Anzahl der geschlossenen Leervolumina, d.h. der Vertiefungen bzw. Mulden in Abhängigkeit von der Messhöhe c pro mm$^2$ an. Die Messhöhe c entspricht dabei dem Wert c, welcher auch in der Abbott-Kurve dargestellt ist. Die Messhöhe c entspricht somit bei 100% der höchsten Erhebung der Oberfläche und bei 0 % der tiefsten Stelle des Oberflächenprofils.

Es gilt:

$n_{cl}$ (c) = Anzahl der geschlossenen Leerflächen pro Flächeneinheit (1/mm$^2$) bei gegebener Messhöhe c (%) und

$n_{clm}$ = MAX($n_{cl}$ ($c_i$)), wobei $n_{clm}$ die maximale Anzahl der geschlossenen Leerflächen pro Flächeneinheit (1/mm$^2$) mit $c_i$ = 0 bis 100% entspricht.

Schließlich dient auch das geschlossene Leervolumen $V_{vcl}$ der Oberfläche zur Charakterisierung der Oberfläche. Es bestimmt die Aufnahmefähigkeit der Oberfläche beispielsweise für Schmierstoffe. Das geschlossene Leervolumen wird durch Bestimmung der geschlossenen Leerfläche $A_{vcl}(c)$ in Abhängigkeit der Messhöhe c bestimmt. Das geschlossene Leervolumen $V_{vcl}$ ergibt sich dann aus:

$$V_{vcl} = \int_{0}^{100\%} A_{vcl}(c)\,dc$$

Auch mit Hilfe der Schiefe der Topographie der Oberfläche $S_{sk}$ kann die Oberfläche beschrieben werden. Diese gibt an, ob die vermessene Oberfläche einen plateauartigen Aufbau mit Vertiefungen aufweist oder eine durch Erhebungen oder Spitzen geprägte Oberfläche vorliegt. Die $S_{sk}$ ist gemäß DIN EN ISO 25178-2 der Quotient der mittleren dritten Potenz der Ordinatenwerte und der dritten Potenz der mittleren quadratischen Höhe $S_q$. Es gilt:

$$S_{sk} = \frac{1}{S_q^3}\left(\frac{1}{A}\iint_A z^3(x,y)\,dxdy\right) ,$$

wobei A der begrenzte Oberflächenteil der Messung ist und z die Höhe des Messpunktes. Für $S_q$ gilt:

$$S_q = \sqrt{\frac{1}{A}\iint_A z^2(x,y)\,dxdy} .$$

Ist $S_{sk}$ kleiner Null so liegt eine plateauartige, durch Vertiefungen geprägte Oberfläche vor. Bei einem Wert für $S_{sk}$ größer Null wird die Oberfläche durch Spitzen geprägt und weist keinen oder nur einen sehr geringen plateauartigen Oberflächenanteil auf.

Alle oben genannten Parameter zur flächenhaften Rauheitsmessung von Oberflächen werden optisch ermittelt. Es sind statistische Größen, von denen im Weiteren die Mittelwerte aus einer Anzahl von mindestens 6 Messungen gewonnen werden. Die Messungen erfolgen auf Ober- und Unterseite jeweils am Rand und in der Mitte des Aluminiumbandes. Aus diesen optisch bestimmten Oberflächentopographiemesswerten wird das arithmetische Mittel als Mittelwert bestimmt. Die Messungen erfolgen gemäß DIN EN ISO 25178 mit einer quadratischen Messfläche mit einer Kantenlänge von 2 mm.

Die richtungsunabhängige Oberflächentopographie des Aluminiumbandes kann vorzugsweise einen Mittelwert für den Mittenrauwert $S_a$ von 0,7 $\mu$m bis 6 $\mu$m aufweisen. Um eine besonders effektive Umformung zu gewährleisten, kann der Mittelwert für den Mittenrauwert $S_a$ des verwendeten Bands von 0,9 $\mu$m bis 3 $\mu$m gewählt werden. Eine weitere Optimierung, insbesondere im Hinblick auf die Bereitstellung von effektiven Schmierstofftaschen, kann über einen Mittelwert des Mittenrauwerts $S_a$ von 1,1 $\mu$m bis 1,8 $\mu$m erreicht werden.

Erfindungsgemäß beträgt der Mittelwert für das geschlossene Leervolumen $V_{vcl}$ der Oberflächentopographie des Aluminiumbandes mindestens 130 mm$^3$/m$^2$, bevorzugt mindestens 200 mm$^3$/m$^2$. Als eine praktische Obergrenze für den Mittelwert des geschlossenen Leervolumens $V_{vcl}$ kann 1000 mm$^3$/m$^2$ angesehen werden. Bevorzugt liegt der Mittelwert für das geschlossene Leervolumen $V_{vcl}$ zwischen 250 mm$^3$/m$^2$ und 800 mm$^3$/m$^2$. Die Oberfläche kann damit deutlich mehr Schmierstoff für den Umformprozess zur Verfügung stellen als die bisher für Wärmetauscher verwendeten konventionellen Oberflächen. Durch entsprechende höhere Leervolumen kann folglich die Schmierstoffaufnahme der Oberfläche und damit das Umformergebnis weiter verbessert werden.

In einer bevorzugten Ausgestaltung weist das Aluminiumband einen Mittelwert für die mittlere Feinheit $n_{MW}$ der Oberflächentopografie von 70 mm$^{-2}$ bis 180 mm$^{-2}$. Weiter bevorzugt beträgt dieser 90 mm$^{-2}$ bis 160 mm$^{-2}$.

Gemäß einer nächsten Ausgestaltung der Verwendung weist die richtungsunabhängige Oberflächentopographie des Aluminiumbandes einen Mittelwert für die reduzierte Spitzenhöhe $S_{pk}$ von 1,0 $\mu$m bis 3,5 $\mu$m, vorzugsweise von 2,0 $\mu$m bis 3,5 $\mu$m auf.

Gemäß einer weiteren Ausgestaltung der Verwendung weist das Band eine Dicke von 0,15 mm bis 4 mm auf. Mit entsprechenden Dicken kann eine signifikante Gewichtseinsparung bei den hergestellten Wärmetauschern erreicht werden, wobei gleichzeitig insbesondere aufgrund der bereits beschriebenen Kombination der spezifischen Oberflächentopographie und einer Umformung eine gute Prozessfähigkeit bei einem thermischen Fügen erhalten bleibt. Für eine optimierte Prozessfähigkeit bei gleichzeitiger Gewichtseinsparung beträgt die Dicke des Bands 0,4 mm bis 3 mm.

Bei einer Verwendung eines Bands umfassend eine Kernschicht und mindestens eine Außenschicht kann die mindestens eine Außenschicht eine mittlere Dicke aufweisen, welche von 2 % bis 20 %, insbesondere von 5% bis 10% der mittleren Dicke des Bands bzw. des Verbundwerkstoffs beträgt. Eine Lotschicht als Außenschicht kann insbesondere eine mittlere Dicke von mindestens 20 $\mu$m aufweisen. Diese Dicken ermöglichen aufgrund der damit verbundenen, absoluten Lotmenge verbesserte Löteigenschaften des Verbundwerkstoffs.

Gemäß einer weiteren Ausgestaltung der Verwendung wird das Band zur Herstellung eines Rohrbodens oder Sammlers in einem Wärmetauscher mit mindestens einem Durchzug verwendet. Wie bereits einleitend ausgeführt, sind die Fügestellen an einem Rohrboden eines Wärmetauschers an die Rohre im Hinblick auf reduzierte Materialstärken besonders problematisch, da bei herkömmlichen Rohrböden nur kleine Anlageflächen zwischen den Bauteilen bestehen. Mit der Verwendung des Bands als Rohrboden, wobei mindestens ein Durchzug vorgesehen ist, kann aufgrund der verbesserten Umformeigenschaften eine sehr große Tiefung in dem Durchzug erreicht werden, welche als Anlageflächen dienen kann.

In einer weiteren Ausgestaltung der Verwendung wird das Band mit mindestens einem weiteren Bauteil; insbesondere einem Rohr, durch thermisches Fügen verbunden. Der umgeformte Bereich des Bands kann hierbei als Fügestelle verwendet werden. Das thermische Fügen kann im Vakuum, insbesondere mit einem maximalen Druck von 10$^{-5}$ mbar durchgeführt werden. Das Vakuumlöten kann dabei ohne Flussmittel erfolgen. Ebenso kann das thermische Fügen in einer Schutzgasatmosphäre durchgeführt werden, beispielsweise mittels eines CAB-Verfahrens. Die Verwendung einer Schutzgasatmosphäre ist im Vergleich zum Vakuumlöten apparativ weniger aufwändig.

Gemäß einer weiteren Lehre wird die oben genannte Aufgabe betreffend ein Aluminiumlegierungsband zur Herstellung eines Wärmetauscherbauteils über eine Umformung, insbesondere für eine beschriebene Verwendung, umfassend mindestens eine Kernschicht und mindestens eine einseitig oder beidseitig auf der Kernschicht vorgesehenen Außenschicht bestehend aus einer Aluminiumlotlegierung, dadurch gelöst, dass das Aluminiumlegierungsband mindestens eine walzgeprägte Oberfläche aufweist, wobei mindestens ein Bereich der walzgeprägten Oberfläche eine richtungsunabhängige Oberflächentopographie aufweist und der Mittelwert für das geschlossene Leervolumen Vvcl der Oberflächentopographie des Bands mindestens 130 mm3 / m2 beträgt. Vorzugsweise weist die Aluminiumlotschicht die walzgeprägte im Wesentlichen richtungsunabhängige Oberflächentopographie auf. Wie bereits zur Verwendung ausgeführt, wird eine Umformung des Bands zu einem Wärmetauscherbauteil entscheidend durch die prägegewalzte Oberflächentopographie begünstigt. Im Gegensatz zu denen aus dem Stand der Technik bekannten Bändern mit Lotschichten für Wärmetauscher, welche eine gewalzte Oberfläche mit einer Vorzugsrichtung aufweisen, können mit dem beschriebenen Band weiter optimierte Tiefungen bei der Umformung erreicht werden. Zudem weist das Band eine Außenschicht bestehend aus einer Aluminiumlotlegierung als Lotschicht auf. Damit wird über das Band selbst das Material des Lots bereitgestellt, so dass ein flexibles und zuverlässiges thermisches Fügen ermöglicht wird.

Ein besonderer Vorteil ergibt sich über die Kombination der Außenschicht bestehend aus einer Aluminiumlotlegierung mit der walzgeprägten Oberfläche aufweisend eine richtungsunabhängige Oberflächentopographie, da mit den verbesserten Umformeigenschaften, beispielsweise bei einem Ziehvorgang, eine besonders gleichmäßige Ausformung mit im Wesentlichen homogenen Wanddicken im umgeformten Bereich ermöglicht wird. Dadurch bleibt auch das Lot, d.h. die geformte Lotschicht, gleichmäßig über die umgeformten Bereiche verteilt und auch die Dickenverhältnisse zwischen Kernschicht und Lotschicht können im Wesentlichen erhalten bleiben. Folglich kann das Lötergebnis an den umgeformten Bereichen weiter verbessert werden.

Die richtungsunabhängige Oberflächentopographie vorzugsweise der Aluminiumlotschicht des Aluminiumbandes kann vorzugsweise einen Mittelwert für den Mittenrauwert $S_a$ von 0,7 $\mu$m bis 6 $\mu$m aufweisen. Um eine besonders effektive Umformung zu gewährleisten, kann der Mittelwert für den Mittenrauwert $S_a$ des verwendeten Bands von 0,9 $\mu$m bis 3 $\mu$m gewählt werden. Eine weitere Optimierung, insbesondere im Hinblick auf die Bereitstellung von effektiven Schmierstofftaschen, kann über einen Mittelwert des Mittenrauwerts $S_a$ von 1,1 $\mu$m bis 1,8 $\mu$m erreicht werden.

Gemäß einer weiteren Ausgestaltung beträgt der Mittelwert für das geschlossene Leervolumen $V_{vcl}$ der Oberflächentopographie vorzugsweise der Aluminiumlotschicht des Aluminiumbandes mindestens 130 mm$^3$/m$^2$, bevorzugt mindestens 200 mm$^3$/m$^2$. Als eine praktische Obergrenze für den Mittelwert des geschlossenen Leervolumens $V_{vcl}$ kann 1000 mm$^3$/m$^2$ angesehen werden. Bevorzugt liegt der Mittelwert für das geschlossene Leervolumen $V_{vcl}$ zwischen 250 mm$^3$/m$^2$ und 800 mm$^3$/m$^2$.

Die Oberfläche kann damit deutlich mehr Schmierstoff für den Umformprozess zur Verfügung stellen als die bisher für Wärmetauscher verwendeten konventionellen Oberflächen der beispielweise Lot plattierten Aluminiumbänder.

7

Durch entsprechende höhere Leervolumen kann folglich die Schmierstoffaufnahme der Oberfläche und damit das Umformergebnis weiter verbessert werden.

In einer bevorzugten Ausgestaltung weist vorzugsweise die Aluminiumlotschicht des Aluminiumbandes einen Mittelwert für die mittlere Feinheit $n_{MW}$ der Oberflächentopografie von 70 mm$^{-2}$ bis 180 mm$^{-2}$. Weiter bevorzugt beträgt dieser 90 mm$^{-2}$ bis 160 mm$^{-2}$.

Gemäß einer nächsten Ausgestaltung weist die richtungsunabhängige.

Oberflächentopographie, vorzugsweise der Aluminiumlotschicht des Aluminiumbandes einen Mittelwert für die reduzierte Spitzenhöhe $S_{pk}$ von 1,0 µm bis 3,5 µm, vorzugsweise von 2,0 µm bis 3,5 µm auf.

Gemäß einer weiteren Ausgestaltung des Aluminiumlegierungsbands besteht die Außenschicht aus einer Aluminiumlotlegierung des Typs AA4xxx, insbesondere in Kombination mit einer Kernschicht aufweisend eine Aluminiumlegierung des Typs AA3xxx.

Bezüglich weiterer Ausgestaltungen und Vorteile des Aluminiumlegierungsbands wird auf die obigen Ausführungen zur Verwendung verwiesen sowie auf die nachfolgende Beschreibung der Zeichnung. In der Zeichnung zeigt

Fig. 1        schematisch die Bestimmung der Parameter $S_k$, $S_{pk}$ und $S_{vk}$ anhand einer Abbott-Kurve,

Fig. 2a-d     schematisch ein Ausführungsbeispiel einer Verwendung,

Fig. 3        einen Versuchsaufbau zum Tiefungsversuch und

Fig. 4        eine schematische Ansicht eines Wärmetauschers.

In Fig. 1 ist zunächst dargestellt, wie aus einer Abbott-Kurve die Parameterwerte für die Kernrautiefe $S_k$, die reduzierte Muldentiefe $S_{vk}$ sowie die reduzierte Spitzenhöhe $S_{pk}$ ermittelt werden können. Die Bestimmung erfolgt gemäß DIN-EN-ISO 25178 für eine normgerechte Messfläche. Üblicherweise werden optische Messverfahren, beispielsweise konfokale Mikroskopie angewendet, um ein Höhenprofil einer Messfläche zu ermitteln. Aus dem Höhenprofil der Messfläche kann der Flächenanteil des Profils ermittelt werden, der eine Fläche parallel zur Messfläche in der Höhe c schneidet bzw. oberhalb der Fläche verläuft. Stellt man die Höhe c der Schnittfläche in Abhängigkeit vom Flächenanteil der Schnittfläche zur Gesamtfläche dar, ergibt sich die Abbott-Kurve, welche den typischen S-förmigen Verlauf für gewalzte Oberflächen zeigt.

In die ermittelte Abbott-Kurve wird zur Bestimmung der Kernrautiefe $S_k$ der reduzierten Muldentiefe $S_{vk}$ bzw. der reduzierten Spitzenhöhe $S_{pk}$ eine Sekante D mit 40 % Länge so auf der Abbott-Kurve verschoben, dass der Betrag der Steigung der Sekante D minimal ist. Aus der Differenz der Abszissenwerte der Schnittpunkte der Sekante D mit der Abszisse bei 0% Flächenanteil sowie bei 100% Flächenanteil ergibt sich die Kernrautiefe $S_k$ der Oberfläche. Die reduzierte Spitzenhöhe $S_{pk}$ und die reduzierte Muldentiefe $S_{vk}$ entspricht der Höhe eines Dreiecks, das flächengleich mit der Spitzenfläche A1 bzw. der Riefenfläche A2 der Abbott-Kurve ist. Das Dreieck der Spitzenfläche A1 hat als Grundfläche den Wert Smr1, welcher sich aus dem Schnittpunkt einer Parallelen zur X-Achse mit der Abbott-Kurve ergibt, wobei die Parallele zur X-Achse durch den Schnittpunkt der Sekante D mit der Abszisse bei 0%-Flächenanteil verläuft. Das Dreieck der Riefenfläche oder Muldenfläche A2 hat als Grundfläche den Wert 100%- Smr2, wobei Smr2 sich aus dem Schnittpunkt einer Parallelen zur X-Achse mit der Abbott-Kurve ergibt und die Parallele zur X-Achse durch den Schnittpunkt der Sekante D mit der Abszisse bei 100%-Flächenanteil verläuft.

Mit diesen Kennwerten kann das Messprofil charakterisiert werden. Es kann ermittelt werden, ob es sich um ein plateauartiges Höhenprofil mit Vertiefungen handelt oder beispielsweise die Spitzen in dem Höhenprofil der Messfläche überwiegen. Bei Ersterem steigt der Wert für $S_{vk}$ an, bei Letzterem der Wert für $S_{pk}$.

Aus der optischen Vermessung der Oberflächen kann als weiterer Parameter der Oberfläche auch die Muldendichte der Textur $n_{clm}$ über die maximale Anzahl der geschlossenen Leervolumina $n_{clm}$, d.h. der Vertiefungen bzw. Mulden in Abhängigkeit von der Messhöhe c in Prozent pro mm$^2$ ermittelt werden. Dies ergibt die Anzahl der geschlossenen Leerflächen pro Flächeneinheit (1/mm$^2$) bei gegebener Messhöhe c (%). Aus $n_{cl}(c)$ wird das Maximum $n_{clm}$ bestimmt. Je größer $n_{dm}$ desto feiner die Oberflächenstruktur.

Ferner kann durch die optische Vermessung auch das geschlossene Leervolumen Vvcl durch Integration der geschlossenen Leerflächen $A_{vcl}(c)$ über die Messhöhe c ermittelt werden. Das geschlossene Leervolumen ist ebenfalls ein charakteristisches Oberflächenmerkmal der erfindungsgemäßen Bänder und Bleche.

Die Messung der Rauigkeit der Oberfläche erfolgt wie bereits ausgeführt optisch, da so im Vergleich zu einer taktilen Messung wesentlich schneller abgetastet werden kann. Die optische Erfassung erfolgt beispielsweise über Interferometrie oder konfokale Mikroskopie, wie es bei den vorliegenden Messdaten erfolgt ist. Gemäß EN ISO 25178-2 sind auch die Messflächen in ihrer Größe festgelegt. Die Messdaten wurden über quadratische Messflächen mit einer Seitenlänge von jeweils 2 mm ermittelt. Um die Mittelwerte der Oberflächenparameter für ein Band zu bestimmen, wurden auf Ober-und Unterseite jeweils am Rand des Bandes und in der Mitte des Bandes Messungen durchgeführt und der arithmetische Mittelwert für den Parameter aus diesen Messungen jeweils berechnet.

Als Messsystem wurde bei der Messung der Ausführungsbeispiele ein konfokales Mikroskop vom Typ Nanofocus μSurf verwendet. Die Welligkeit des Profils wurde mit einem Gaußfilter mit der Grenzwellenlänge von Lc 500 μm reduziert.

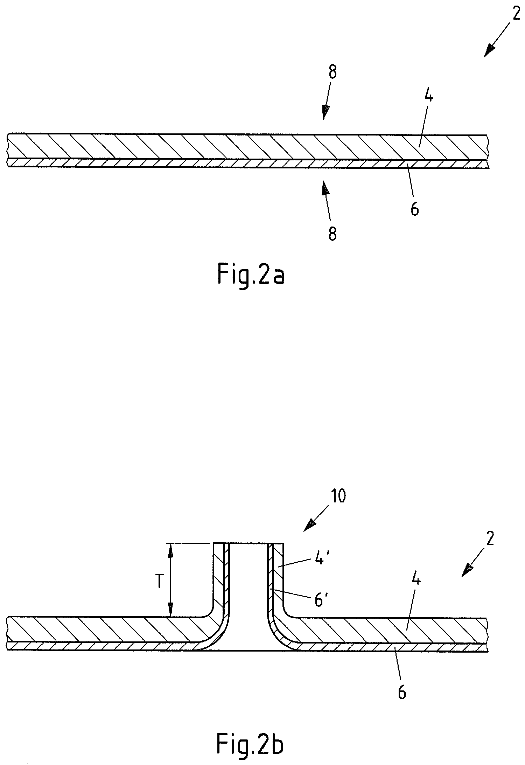

Fig. 2a-d zeigen schematisch ein Ausführungsbeispiel einer Verwendung eines Bands 2 zur Herstellung eines Wärmetauscherbauteils. Das Band 2 liegt in Fig. 2a als Verbundwerkstoff mit einer Kernschicht 4 aus einer Aluminiumlegierung des Typs AA3xxx und einer Außenschicht 6 aus einer Aluminiumlotlegierung des Typs AA4xxx vor. Das Band 2 ist beidseitig prägegewalzt und weist Oberflächen 8 mit einer richtungsunabhängigen Oberflächentopographie mit einem Mittenrauwert $S_a$ von 0,7 μm bis 6 μm auf. Die Dicke des Bands beträgt 0,15 mm bis 4 mm, wobei die Außenschicht 6,5 % der Dicke des Bands ausmacht.

Die Oberflächentopographie der Oberflächen 8 ist über ein Walzen mit einer Prägewalze eingebracht worden, wobei die Prägewalze über EDT strukturiert wurde.

Das Band 2 wird einer Umformung unterworfen, wobei auch die Bereiche der Oberflächen 8 mit der im Wesentlichen richtungsunabhängigen Oberflächentopographie umgeformt werden. Durch ein Abstreckgleitziehen des Bands 2 entsteht der in Fig. 2b dargestellte Durchzug 10 in dem Band 2. Durch eine solche Umformung des Bands 2 im Zusammenhang mit der spezifischen Oberflächentopografie können über den Durchzug 10 besonders große Anlageflächen für das Fügen mit weiteren Wärmetauscherbauteilen bereitgestellt werden. Durch die Optimierung der Umformung ist auch die umgeformte Außenschicht 6' bzw. Lotschicht homogen über den Bereich der Tiefung T verteilt und auch das Verhältnis der Wanddicken der umgeformten Kernschicht 4' und der umgeformten Außenschicht 6' bleibt im Wesentlichen erhalten. Das Band 2 ist hierbei zu einem Wärmetauscherbauteil in Form eines Rohrbodens umgeformt worden.

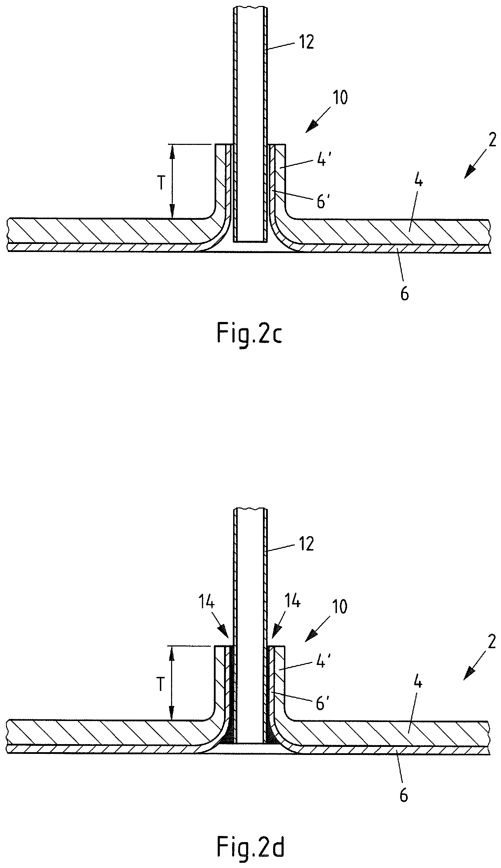

Zur weiteren Verwendung des Bands 2 ist in Fig. 2c eine Positionierung eines Rohrs 12 in dem Durchzug 10 gezeigt, wobei das Rohr 12 umfangsseitig im Wesentlichen über die gesamte Länge der Tiefung T an dem umgeformten Band 2 bzw. dem Durchzug 10 anliegt.

Anschließend können das Rohr 12 und das zum Rohrboden umgeformte Band 2 thermisch gefügt werden. Hierfür wird die umgeformte Außenschicht 6' des Bands 2 aufgeschmolzen.und in einen Materialschluss mit dem Rohr 12 gebracht. Damit entsteht die in Fig. 2d gezeigte Fügestelle 14. Durch die große Tiefung T entsteht eine großflächige Fügestelle 14 sowie eine Stützung des dünnwandigen Rohrs 12 über die Länge der Tiefung T.

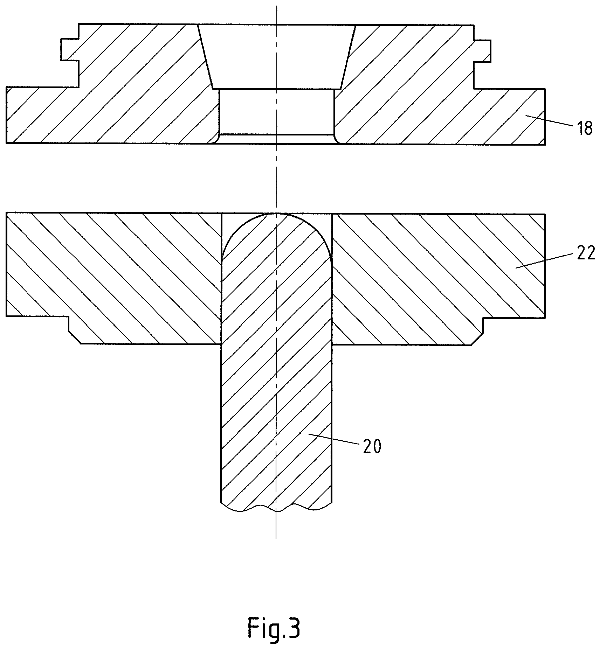

Fig. 3 zeigt einen Versuchsaufbau zum Tiefungsversuch mit Ronden, welcher für eine Versuchsreihe zum Umformverhalten von Bändern zur Herstellung von Wärmetauscherbauteilen verwendet wurde. Der Versuchsaufbau umfasst eine Matrize 18, einen Stempel 20 sowie Niederhalter 22. Die Matrize 18 weist einen Innendurchmesser von 55,2 mm und einen Matrizenradius von 5 mm auf. Der Niederhalter wird mit einer Kraft von 200 kN betrieben. Der Stempel weist einen Durchmesser von 50 mm auf und wird mit einer Ziehgeschwindigkeit von 1,5 mm/s gefahren.

Ronden mit Durchmessern von 85 mm wurden in den Versuchsaufbau gelegt und einem Streckziehen unterworfen. In einer ersten Versuchsreihe wurden Ronden aus einer Aluminiumlegierung des Typs AA 3003 untersucht. Ronden mit einer richtungsunabhängigen Oberflächentopographie, welche durch ein Prägewalzen mit einer EDT-Topographie strukturiert sind, wurden unter unterschiedlichen Schmierstoffbedingungen untersucht. Die Dicke der prägegewalzten Ronden betrug 1,43 mm. Eine herkömmliche Mill-Finish-Oberfläche wurde als Vergleich verwendet, wobei bei diesen Proben eine Dicke von 1,5 mm verwendet wurde. Die Mittelwerte der Oberflächenparameter der Proben sind in Tab. 1 festgehalten.

**Tab. *1***

| | $S_a$ (μm) | $S_{sk}$ | $S_{pk}$ (μm) | $S_k$ (μm) | $S_{vk}$ (μm) | $n_{clm}$ (mm$^{-2}$) | $V_{vcl}$ (mm$^3$/m$^2$) |
|---|---|---|---|---|---|---|---|
| Mill-Finish | 0,54 | 0,22 | 0,72 | 1,74 | 0,55 | 17 | 32 |
| EDT | 1,39 | 2,60 | 3,18 | 2,69 | 0,48 | 196 | 525 |

Als Schmierstoff wurde der unter der Bezeichnung *Avilube Metapress 9731* erhältliche Schmierstoff mit unterschiedlichen Aufträgen eingesetzt. Als weiterer Vergleich wurden Versuche mit Lanolin/Teflon als Schmierstoff gemacht. Die erreichte Tiefung ist in Tab. 2 wiedergegeben:

*Tab. 2*

| | Lanolin/Teflon (Vergleich) | Avilube 1g/m$^2$ | Avilube 2 g/m$^2$ | Avilube 3 g/m$^2$ |
|---|---|---|---|---|
| Mill-Finish (Vergleich) | 23,4 mm | 19,5 mm | 19,9 mm | 19,8 mm |
| EDT | 23,1 mm | 19,6 mm | 21,0 mm | 21,4 mm |

Bei den Vergleichsversuchen mit Lanolin/Teflon (Streckziehversuch) ist die Schmierung praktisch vollständig, d.h. Oberflächeneffekte auf das Ergebnis der Tiefung werden weitgehend unterdrückt. Hierbei zeigen die Mill-Finish-Vergleichsproben aufgrund der etwas größeren Dicke von 1,5 mm eine größere Tiefung als die EDT-Proben, welche nur eine Dicke von 1,43 mm aufwiesen. Bei einem geringen Schmierstoffauftrag von 1 g/m$^2$ (Tiefziehversuch) zeigt sich jedoch bereits ein deutlicher Effekt der Oberflächentopographie darin, dass die Mill-Finish-Vergleichsproben und die EDT-Proben trotz der unterschiedlichen Dicken eine vergleichbare Tiefung erzielen. Mit einem zunehmenden Schmierstoffauftrag von 2 g/m$^2$ bis hin zu 3 g/m$^2$ kann über die EDT-Topographie eine weitere deutliche Steigerung der Tiefung erreicht werden. Dagegen zeigt die Mill-Finish-Oberfläche kein Potenzial zum Erzielen höherer Tiefungen bzw. Umformgrade mit steigendem Schmierstoffauftrag.

In einer weiteren Versuchsreihe wurden Verbundwerkstoffe untersucht. Die untersuchten Ronden umfassten eine Kernschicht aus einer Aluminiumlegierung des Typs AA 3003, welche mit einer Lotschicht bzw. Außenschicht aus einer Aluminiumlegierung des Typs AA4045 plattiert war. Hierbei betrug die Schichtdicke der Lotschicht 5 % der gesamten Dicke des Verbundwerkstoffs. Die Lotschicht war matrizenseitig angeordnet.

Für die Ronden mit der EDT-Oberflächentopographie betrug die Dicke 1,43 mm, während auch hier als Vergleich Ronden mit einer Mill-Finish-Oberfläche mit Längsstreifen und einer Dicke von 1,5 mm untersucht wurden. Die Mittelwerte der Oberflächenparameter der Proben sind in Tab. 3 festgehalten.

*Tab. 3*

| | $S_a$ (μm) | $S_{sk}$ | $S_{pk}$ (μm) | $S_k$ (μm) | $S_{vk}$ (μm) | $n_{clm}$ (mm$^{-2}$) | $V_{vcl}$ (mm$^3$/m$^2$) |
|---|---|---|---|---|---|---|---|
| Mill-Finish | 0,40 | 0,01 | 0,52 | 1,30 | 0,43 | 36 | 52 |
| EDT | 1,54 | 0,81 | 2,83 | 3,71 | 1,49 | 151 | 718 |

In dem Versuch wurde auch optional eine Ziehsicke an Matrize 18 und Niederhalter 22 angebracht (nicht in Fig. 3 dargestellt), welche einen Materialfluss von den Außenbereichen der Ronde in den Bereich des Durchzugs unterdrückte. Die erreichte Tiefung unter verschiedenen Schmierstoffaufträgen für die plattierten Ronden ist in Tab. 4 festgehalten:

*Tab. 4*

| | Lanolin/Teflon (Vergleich) | Avilube 2 g/m$^2$ mit Ziehsicke | Avilube 2 g/m2 |
|---|---|---|---|
| Mill-Finish plattiert (Vergleich) | 22,8 mm | 19,7 mm | 20,4 mm |
| EDT plattiert | 22,1 mm | 20,1 mm | 21,5 mm |

Bei dem Vergleichsversuch mit Lanolin/Teflon ist die größere Tiefung für die Mill-Finish-Vergleichsprobe wieder auf die größere Dicke zurückzuführen. Für die plattierten Werkstoffe kann jedoch ebenfalls mit einem Avilube-Schmierstoffauftrag eine Steigerung der Tiefung für die EDT-Topographie beobachtet werden, wobei diese Steigerung bei Versuchen mit und ohne Ziehsicke erreicht wird.

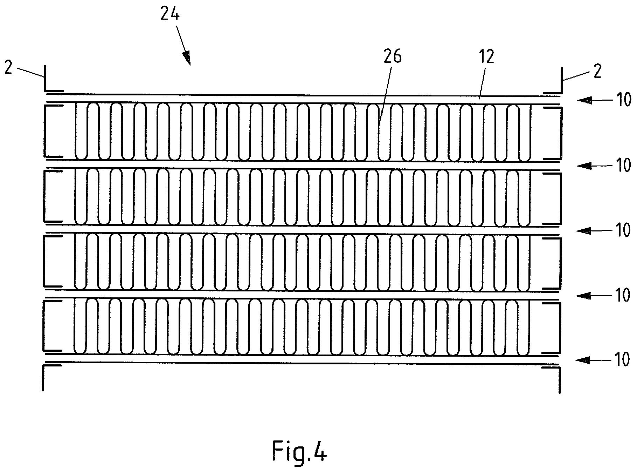

Fig. 4 zeigt schließlich eine schematische Ansicht eines Wärmetauschers 24. Mehrere parallel verlaufende Rohre 12 sind vorgesehen, wobei zwischen den Rohren mäanderförmig gebogene Lamellen 26 angeordnet sind. Die Rohre 12 sind über Rohrböden miteinander verbunden, welche über die beschriebene Verwendung eines umgeformten Bands 2 mit Durchzügen 10 bereitgestellt wird.

**Patentansprüche**

1. Verwendung eines Bands (2) aus einer Aluminiumlegierung zur Herstellung eines Wärmetauscherbauteils,
   **dadurch gekennzeichnet, dass**
   ein walzgeprägtes Band (2) verwendet wird, welches mindestens einen Bereich mit einer im Wesentlichen richtungsunabhängigen Oberflächentopographie aufweist und das Band (2) bei der Herstellung des Wärmetauscherbauteils einer Umformung unterworfen wird, wobei zumindest der Bereich mit der richtungsunabhängigen Oberflächentopographie umgeformt wird, wobei der Mittelwert für das geschlossene Leervolumen $V_{vcl}$ der Oberflächentopographie des Bands (2) mindestens 130 mm$^3$/m$^2$ beträgt.

2. Verwendung nach Anspruch 1,
   **dadurch gekennzeichnet, dass**

die Umformung einen Ziehvorgang umfasst.

3. Verwendung nach einem der Ansprüche 1 oder 2,
**dadurch gekennzeichnet, dass**
das Band (2) vor der Umformung einer Schlitzung unterworfen wird.

4. Verwendung nach einem der Ansprüche 1 bis 3,
**dadurch gekennzeichnet, dass**
das Band (2) eine Aluminiumlegierung des Typs AA3xxx aufweist.

5. Verwendung nach einem der Ansprüche 1 bis 4,
**dadurch gekennzeichnet, dass**
das Band (2) eine Kernschicht (4) und mindestens eine Außenschicht (6) aufweist.

6. Verwendung nach Anspruch 5,
**dadurch gekennzeichnet, dass**
die Außenschicht (6) eine Aluminiumlegierung des Typs AA1xxx, AA4xxx oder AA7xxx aufweist, insbesondere in Kombination mit einer Kernschicht (4) aufweisend eine Aluminiumlegierung des Typs AA3xxx.

7. Verwendung nach Anspruch 1 bis 6,
**dadurch gekennzeichnet, dass**
die im Wesentlichen richtungsunabhängige Oberflächentopographie einen Mittenrauwert $S_a$ von 0,7 $\mu$m bis 6 $\mu$m aufweist.

8. Verwendung nach einem der Ansprüche 1 bis 7,
**dadurch gekennzeichnet, dass**
die im Wesentlichen richtungsunabhängige Oberflächentopographie eine reduzierte Spitzenhöhe $S_{pk}$ von 1,0 $\mu$m bis 3,5 $\mu$m aufweist.

9. Verwendung nach einem der Ansprüche 1 bis 8,
**dadurch gekennzeichnet, dass**
das Band (2) eine Dicke von 0,15 mm bis 4 mm aufweist.

10. Verwendung nach einem der Ansprüche 1 bis 9,
**dadurch gekennzeichnet, dass**
das Band (2) zur Herstellung eines Rohrbodens oder Sammlers in einem Wärmetauscher (24) mit mindestens einem Durchzug (10) verwendet wird.

11. Verwendung nach einem der Ansprüche 1 bis 10,
**dadurch gekennzeichnet, dass**
das Band (2) mit mindestens einem weiteren Bauteil, insbesondere einem Rohr (12), durch thermisches Fügen verbunden wird.

12. Aluminiumlegierungsband zur Herstellung eines Wärmetauscherbauteils über eine Umformung, insbesondere für eine Verwendung nach einem der Ansprüche 1 bis 11, umfassend

- mindestens eine Kernschicht (4) und
- mindestens eine einseitig oder beidseitig auf der Kernschicht (4) vorgesehene Außenschicht (6) bestehend aus einer Aluminiumlotlegierung,

**dadurch gekennzeichnet, dass**
das Aluminiumlegierungsband mindestens eine walzgeprägte Oberfläche (8) aufweist, wobei mindestens ein Bereich der walzgeprägten Oberfläche (8) eine im Wesentlichen richtungsunabhängige Oberflächentopographie aufweist, wobei der Mittelwert für das geschlossene Leervolumen $V_{vcl}$ der Oberflächentopographie des Bands (2) mindestens 130 mm$^3$/m$^2$ beträgt.

13. Aluminiumlegierungsband nach Anspruch 12,
**dadurch gekennzeichnet, dass**

die im Wesentlichen richtungsunabhängige Oberflächentopographie einen Mittenrauwert $S_a$ von 0,7 µm bis 6 µm aufweist.

**14.** Aluminiumlegierungsband nach Anspruch 12 oder 13,
**dadurch gekennzeichnet, dass**
die im Wesentlichen richtungsunabhängige Oberflächentopographie eine reduzierte Spitzenhöhe $S_{pk}$ von 1,0 µm bis 3,5 µm aufweist.

**15.** Aluminiumlegierungsband nach einem der Ansprüche 12 bis 14,
**dadurch gekennzeichnet, dass**
die Außenschicht (6) aus einer Aluminiumlotlegierung des Typs AA4xxx besteht, insbesondere in Kombination mit einer Kernschicht (4) aufweisend eine Aluminiumlegierung des Typs AA3xxx.

**Claims**

**1.** Use of a strip (2) of an aluminium alloy for producing a heat exchanger component,
**characterised in that**
a roll-embossed strip (2) is used which has at least one region with a substantially direction-independent surface topography and the strip (2) is subjected to forming during the production of the heat exchanger component, wherein at least the region with the direction-independent surface topography is formed, wherein the mean value for the closed empty volume $V_{vcl}$ of the surface topography of the strip (2) is at least 130 mm$^3$/m$^2$.

**2.** Use according to claim 1,
**characterised in that**
the forming comprises a drawing process.

**3.** Use according to any one of claims 1 or 2,
**characterised in that**
the strip (2) is subjected to slotting before the forming.

**4.** Use according to any one of claims 1 to 3,
**characterised in that**
the strip (2) has an aluminium alloy of the type AA3xxx.

**5.** Use according to any one of claims 1 to 4,
**characterised in that**
the strip (2) has a core layer (4) and at least one outer layer (6).

**6.** Use according to claim 5,
**characterised in that**
the outer layer (6) has an aluminium alloy of the type AA1xxx, AA4xxx or AA7xxx, in particular in combination with a core layer (4) having an aluminium alloy of the type AA3xxx.

**7.** Use according to any one of claims 1 to 6,
**characterised in that**
the substantially direction-independent surface topography has a mean roughness value $S_a$ of 0.7 µm to 6 µm.

**8.** Use according to any one of claims 1 to 7,
**characterised in that**
the substantially direction-independent surface topography has a reduced peak height $S_{pk}$ of 1.0 µm to 3.5 µm.

**9.** Use according to any one of claims 1 to 8,
**characterised in that**
the strip (2) has a thickness of 0.15 mm to 4 mm.

**10.** Use according to any one of claims 1 to 9,
**characterised in that**

the strip (2) is used for producing a tube plate or collector in a heat exchanger (24) having at least one passage (10).

11. Use according to any one of claims 1 to 10,
**characterised in that**
the strip (2) is connected to at least one further component, in particular a tube (12), by thermal joining.

12. Aluminium alloy strip for producing a heat exchanger component by forming, in particular for a use according to any one of claims 1 to 11, comprising

    - at least one core layer (4) and
    - at least one outer layer (6) consisting of an aluminium brazing alloy provided on the core layer (4) on one or both sides,

**characterised in that**
the aluminium alloy strip has at least one roll-embossed surface (8), wherein at least one region of the roll-embossed surface (8) has a substantially direction-independent surface topography, wherein the mean value for the closed empty volume $V_{vcl}$ of the surface topography of the strip (2) is at least 130 mm$^3$/m$^2$.

13. Aluminium alloy strip according to claim 12,
**characterised in that**
the substantially direction-independent surface topography has a mean roughness value $S_a$ of 0.7 $\mu$m to 6 $\mu$m.

14. Aluminium alloy strip according to claim 12 or 13,
**characterised in that**
the substantially direction-independent surface topography has a reduced peak height $S_{pk}$ of 1.0 $\mu$m to 3.5 $\mu$m.

15. Aluminium alloy strip according to any one of claims 12 to 14,
**characterised in that**
the outer layer (6) consists of an aluminium brazing alloy of the type AA4xxx, in particular in combination with a core layer (4) having an aluminium alloy of the type AA3xxx.


**Revendications**

1. Utilisation d'une bande (2) d'un alliage d'aluminium pour la fabrication d'un composant d'échangeur de chaleur,
**caractérisée en ce qu'**
une bande gaufrée par laminage (2) est utilisée qui présente au moins une région avec une topographie de surface essentiellement indépendante de la direction, et la bande (2) est soumise à un processus de formage pendant la fabrication du composant d'échangeur de chaleur, dans lequel au moins la région avec la topographie de surface indépendante de la direction est formée, dans lequel la valeur moyenne pour le volume de vide fermé $V_{vcl}$ de la topographie de surface de la bande (2) est d'au moins 130 mm$^3$/m$^2$.

2. Utilisation selon la revendication 1,
**caractérisée en ce que**
le processus de formage comprend une opération d'étirage.

3. Utilisation selon l'une quelconque des revendications 1 ou 2,
**caractérisée en ce que**
la bande (2) est soumise à un refendage avant le processus de formage.

4. Utilisation selon l'une quelconque des revendications 1 à 3,
**caractérisée en ce que**
la bande (2) comprend un alliage d'aluminium du type AA3xxx.

5. Utilisation selon l'une quelconque des revendications 1 à 4,
**caractérisée en ce que**
la bande (2) comprend une couche d'âme (4) et au moins une couche extérieure (6).

**6.** Utilisation selon la revendication 5,
**caractérisée en ce que**
la couche extérieure (6) comprend un alliage d'aluminium du type AA1xxx, AA4xxx ou AA7xxx, en particulier en combinaison avec une couche d'âme (4) comprenant un alliage d'aluminium du type AA3xxx.

**7.** Utilisation selon la revendication 1 à 6,
**caractérisée en ce que**
la topographie de surface essentiellement indépendante de la direction présente une rugosité moyenne $S_a$ de 0,7 $\mu$m à 6 $\mu$m.

**8.** Utilisation selon l'une quelconque des revendications 1 à 7,
**caractérisée en ce que**
la topographie de surface essentiellement indépendante de la direction présente une hauteur de pic réduite $S_{pk}$ de 1,0 $\mu$m à 3,5 $\mu$m.

**9.** Utilisation selon l'une quelconque des revendications 1 à 8,
**caractérisée en ce que**
la bande (2) a une épaisseur de 0,15 mm à 4 mm.

**10.** Utilisation selon l'une quelconque des revendications 1 à 9,
**caractérisée en ce que**
la bande (2) est utilisée pour la fabrication d'une plaque tubulaire ou d'un collecteur dans un échangeur de chaleur (24) ayant au moins une passage (10).

**11.** Utilisation selon l'une quelconque des revendications 1 à 10,
**caractérisée en ce que**
la bande (2) est reliée à au moins un autre composant, en particulier un tube (12), par liaison thermique.

**12.** Bande en alliage d'aluminium pour la fabrication d'un composant d'échangeur de chaleur par un processus de formage, en particulier pour une utilisation selon l'une quelconque des revendications 1 à 11, comprenant

- au moins une couche d'âme (4) et
- au moins une couche extérieure (6) constituée d'un alliage d'aluminium de brasage, prévue sur l'un ou les deux côtés de la couche d'âme (4),

**caractérisée en ce que**
la bande en alliage d'aluminium présente au moins une surface gaufrée par laminage (8), dans lequel au moins une région de la surface gaufrée par laminage (8) présente une topographie de surface essentiellement indépendante de la direction, dans lequel la valeur moyenne pour le volume de vide fermé $V_{vcl}$ de la topographie de surface de la bande (2) est d'au moins 130 mm$^3$/m$^2$.

**13.** Bande en alliage d'aluminium selon la revendication 12,
**caractérisée en ce que**
la topographie de surface essentiellement indépendante de la direction présente une rugosité moyenne $S_a$ de 0,7 $\mu$m à 6 $\mu$m.

**14.** Bande en alliage d'aluminium selon la revendication 12 ou 13,
**caractérisée en ce que**
la topographie de surface essentiellement indépendante de la direction présente une hauteur de pic réduite $S_{pk}$ de 1,0 $\mu$m à 3,5 $\mu$m.

**15.** Bande en alliage d'aluminium selon l'une quelconque des revendications 12 à 14, **caractérisée en ce que**
la couche extérieure (6) est constituée d'un alliage d'aluminium de brasage du type AA4xxx, en particulier en combinaison avec une couche d'âme (4) comprenant un alliage d'aluminium du type AA3xxx.

Fig.1

Fig.2a

Fig.2b

Fig.2c

Fig.2d

18

22

20

Fig.3

Fig.4

EP 3 266 890 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100124668 A1

- EP 1202018 A2